(19) Europäisches Patentamt
European Patent Office
Office européen des brevets

(11) EP 3 758 854 B1

(12) EUROPEAN PATENT SPECIFICATION

(45) Date of publication and mention
of the grant of the patent:
25.12.2024 Bulletin 2024/52

(21) Application number: 19713144.4

(22) Date of filing: 13.03.2019

(51) International Patent Classification (IPC):
B05B 12/00 (2018.01)          G01F 1/34 (2006.01)
B05B 12/08 (2006.01)          B05B 15/58 (2018.01)
B05B 9/04 (2006.01)           B05B 16/00 (2018.01)

(52) Cooperative Patent Classification (CPC):
B05B 12/088; B05B 12/006; B05B 9/0423;
B05B 15/58; B05B 16/00

(86) International application number:
PCT/GB2019/050703

(87) International publication number:
WO 2019/175581 (19.09.2019 Gazette 2019/38)

## (54) FLOW BALANCING IN PAINT CIRCULATION SYSTEM

STRÖMUNGSAUSGLEICH IN EINEM FARBKREISLAUF

ÉQUILIBRAGE DE FLUX DANS UN SYSTÈME DE CIRCULATION DE PEINTURE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.03.2018 GB 201804085

(43) Date of publication of application:
06.01.2021 Bulletin 2021/01

(73) Proprietor: Carlisle Fluid Technologies (UK) Ltd.
Bournemouth, Dorset BH11 9LH (GB)

(72) Inventors:
• SMITH, Alan
West Moors, Dorset BH22 0EY (GB)
• WOOD, Nigel
West Moors, Dorset BH22 0ND (GB)

(74) Representative: Gill Jennings & Every LLP
The Broadgate Tower
20 Primrose Street
London EC2A 2ES (GB)

(56) References cited:
EP-A1- 3 222 428          WO-A1-2007/016865
JP-A- H10 263 447         US-A1- 2006 112 771
US-A1- 2006 177 565

• ANONYM: "VENTURI-DURCHFLUSSMESSER
EVR2000 zur Durchflussmessung in
Rohrleitungen", 31 January 2017 (2017-01-31),
XP055585244, Retrieved from the Internet
<URL:https://www.grillo-messgeraete.
de/de/evr2000/#> [retrieved on 20190503]

## Description

## Technical Field

The invention relates to paint circulation systems and methods, such as systems and methods that can be used in automotive paint finishing plant.

## Background

Factory areas such as automotive paint shops typically have multiple paint booths supplied from a single paint pump. Paint flow is maintained by a back pressure regulator (BPR) at each booth independently. Paint Flow can easily become unbalanced due to BPR drift or equipment changes (such as alteration in a hose length). Unbalanced paint flow in can cause issues such as:

- Short circuiting by paint following a path of least resistance in a paint supply system;
- Reduced paint velocity causing pigment "fall out" (if the paint velocity is too low, the pigment particles will start to settle due to gravity);
- "Thrombosis" in paint lines due to decreasing pressure and leading to blockage of paint lines;
- Paint starvation at a user point disrupting production.

It is an object of the present invention to alleviate the aforementioned problems. WO2007/01685A1 discloses a flow measuring device of a stream. "VENTURI-DURCHFLUSSMESSER EVR2000 zur Durchflussmessung in Rohrleitungen", 21 January 2017, XP055585244, discloses a trouble-free straight pipe sections designed for liquids, gases or light fibers. US2006/177565A1 discloses a paint circulation system.

## Summary

The scope of the invention is defined by the appended claims.

According to a first aspect of the invention there is provided a paint circulating system suitable for providing paint to applicators in a product finishing facility, the system comprising:

- A pump for pumping paint around the system;
- An automatically adjustable back-pressure regulator (BPR) to reduce pressure fluctuations of paint upstream of the BPR;
- Means for or indicating a flow rate of paint through a conduit upstream of the BPR comprising means for measuring a pressure drop in the paint flow along a length of a section of the conduit without restricting the paint flow, wherein the means for measuring a pressure drop in the paint comprises pressure sensors configured to measure a starting pressure of paint at the start of the section of the conduit, and an ending pressure of paint at the end of the section of the conduit;
- Control means for controlling the BPR to maintain a desired flow rate based on the indicated flow rate.

Herein, the term "means for indicating flow rate" may refer to a flow rate indicator. The term "control means for controlling the BPR" may refer to a BPR controller.

The conduit may be a pipe. The conduit may further refer to any passage through which fluid can flow and across which there is a measureable pressure drop. The conduit may have a circular cross-section.

The BPR may be a Back Pressure Regulator as disclosed in published European Patent Specification EP1830966B1. Such a back pressure regulator is remotely adjustable/controllable by varying a supply of pressurised fluid that applies pressure to a movable surface within the regulator thereby defining the constriction of a paint flow passage. Such an adjustable BPR may be referred to as a Pilot BPR.

Providing a means for indicating a flow rate of paint through a BPR helps with balance set-up and maintenance of the system. For example, variations in paint flow caused by the factors discussed in the Introduction above can be reduced by monitoring the paint flow and accordingly adjusting control settings of the BPR to ensure that the desired flow rate is maintained through parts of the system.

The paint circulation system may comprise two pressure sensors, one pressure sensor being located at each end of the section of the conduit.

The use of pressure sensors provide for the flow rate to be indicated non-restrictively by obtaining a value of the pressure drop that is directly proportional to the flow rate. Commercially available flowmeters usually involve some sort of restriction such as an orifice plate, or a moving/moveable component (e.g. a turbine meter). These are expensive and not suitable for use with paint because they give rise to high shear within the fluid which can damage the paint itself. The skilled person would appreciate the level of restriction or level of variation of the cross section of a conduit that would result in sufficiently high shear in a paint flow that would cause damage to paint.

The means for indicating the flow rate of paint may comprise means for calculating the flow rate based on the measured pressure drop, the dynamic viscosity of the paint, the length of the section of pipe, and a cross-sectional parameter of the conduit.

The section of the conduit may have a substantially constant diameter or a substantially constant hydraulic diameter. The term "constant hydraulic diameter" may refer to a cross-sectional shape of the conduit that remains unchanged along the section of the conduit that is not necessarily circular. The "constant diameter" may further refer to the length of any straight line passing from side to side through the centre of the conduit. The cross sectional parameter may be the constant diameter or constant hydraulic diameter.

The section of the conduit may have a variable cross section (i.e. varying across the length of the conduit) that does not vary significantly enough to cause degradation of paint due to paint sheer. The cross-sectional parameter may be derived from cross sectional dimensions of the section of the conduit.

In some embodiments of the invention, the flow rate does not need to be calculated. Instead, the measured pressure drop is considered as indicative of flow rate (i.e. as an indication of the flow rate). As such, whilst more complex geometry of the conduit section may render it difficult to provide a calculation of a flow rate value, embodiments may include such complex geometry whilst still providing the necessary indication of flow rate as determined by measuring the pressure drop.

The section of the conduit may be straight, but is not necessarily so.

The means for calculating the flow rate may be configured to be additionally based on a mass flow constant being 679. This constant is based on the mass flow characteristics for a typical pipe/hose used for paint pipework installation.

The means for indicating the flow rate may be arranged to provide a flow rate signal to a paint system controller. The flow rate signal may comprise a pressure drop value.

The control means may be arranged to receive a control signal from the paint system controller based on the flow rate signal and accordingly control the BPR for maintaining the desired flow rate.

The paint system controller may comprise means for displaying any of the indicated flow rate or desired flow rate to an operator.

The paint circulating system may comprise a plurality of paint booths wherein one BPR is located downstream of each paint booth, and, corresponding means for indicating a corresponding flow rate through the corresponding paint booth are located either upstream or downstream of the corresponding paint booth.

The corresponding conduit section of the means for indicating flow rate of each BPR may comprise an equivalent geometric form. If each conduit has an equivalent geometry then a comparison of any pressure drop across each conduit section will provide for a comparison between the flow rate that occurs across each conduit section. The geometries of each conduit section may not be identical, for example they may be mirrored or inverse of eachother.

The paint system controller may be operable to compare the indicated flow rate corresponding to each paint booth and automatically control the BPRs to maintain the desired flow rate to each of the booths based on the comparison. In particular, the paint system controller may be operable to balance the paint booths so that the flow through each paint booth is the same. In some embodiments, the controller may be operable to balance the paint booth by controlling the BPRs to provide for the pressure drop determined by each means for indicating flow rate to be the same.

Comparing the flow rate in each paint booth and automatically adjusting the back pressure of each paint booth allows the correct flow rate per booth to be maintained. This data can be reported back to the relevant paint system controller and displayed to controllers/operators.

The paint system controller may be operable to balance the flow rate through each paint booth by controlling all of the BPRs of each of the plurality of paint booths to each maintain an equal proportion of a master flow rate based on the flow rate comparison, wherein the master flow rate is provided by a pumping station configured to pump paint to the plurality of paint booths.

According to a second aspect of the invention there is provided a method of operating a paint circulating system to provide paint to applicators in a product finishing facility comprising the steps of:

- Pumping paint around the system;
- measuring, without restricting the paint flow and utilizing two or more pressure sensors configured to measure a starting pressure of paint at the start of the section of the conduit, and an ending pressure of paint at the end of the section of conduit, a pressure drop in the paint along a length of a section of the conduit indicative of a flow rate of paint through a conduit upstream of a back-pressure regulator (BPR); and
- Controlling the BPR to maintain a desired flow rate based on the flow rate.

The step of determining an indication of flow rate may comprise calculating the flow rate based on the measured pressure drop, the dynamic viscosity of the paint, the length of the section of the conduit, and the diameter of the conduit.

The method may further comprise the step of comparing the indication of flow rate (such as comparing the measured pressure drop) of paint through each of a plurality of paint booths each located upstream of one of a plurality of BPRs, and controlling each BPR to maintain a desired flow rate to each of the plurality of paint booths.

According to an example of this disclosure not claimed but presented as useful for understanding the invention defined in the claims, a paint flow measurement apparatus for use in a paint circulation system for providing paint to applicators in a product finishing facility. The assembly comprises:

- A section of conduit having a plurality of pressure sensors for measuring the drop in pressure of paint flowing therein; and
- Means for indicating a flow rate based on the measured drop in pressure, the dynamic viscosity of the paint, and the geometry of the section of conduit.

According to an example of this disclosure not claimed but presented as useful for understanding the invention defined in the claims, there is provided a paint circulating system suitable for providing paint to applicators in a product finishing facility, the system comprising:

- a pump for pumping paint around the system;
- a plurality of paint flow paths, each flow path comprising:

  ○ an automatically adjustable back-pressure regulator (BPR) to reduce pressure fluctuations of paint upstream of the BPR; and
  ○ means for indicating a flow rate of paint through a conduit in the flow path, comprising means for measuring a pressure drop in the paint flow along a length of a section of the conduit; and

- control means for adjusting a setting of the BPR to maintain a desired flow rate based on the indicated flow rate.

**Brief Description of the Drawings**

Figure 1 is a schematic drawing of a paint circulation system according to an embodiment of the invention.

Figure 2 is a schematic drawing of a flow measuring means according to an embodiment of the invention.

Figure 3 is a schematic drawing of a flow measuring means according to another embodiment of the invention.

**Detailed Description**

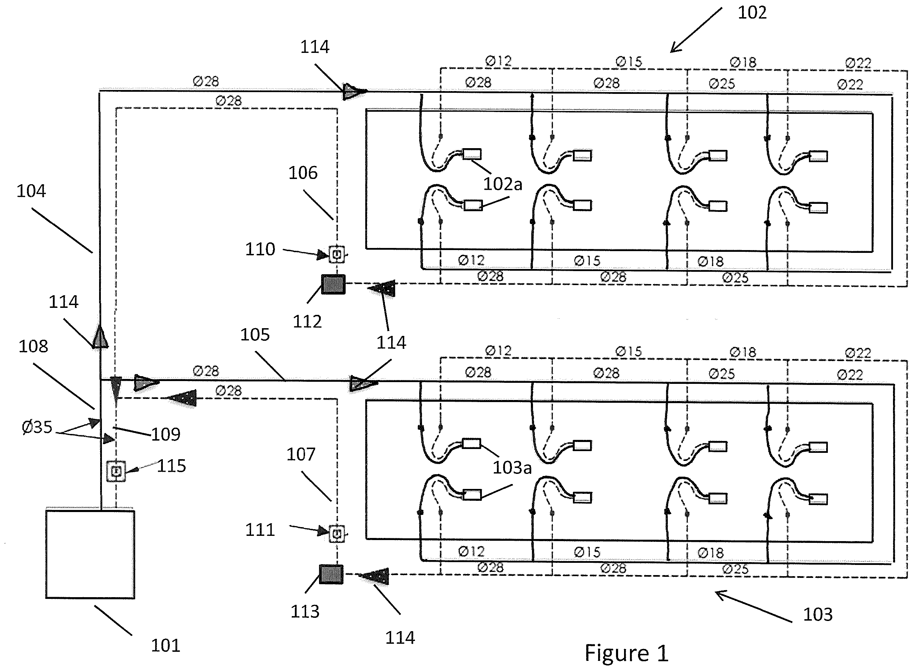

Referring to the drawings, a paint circulation system according to the invention is represented in Figure 1. Paint is pumped from a pumping station 101, which feeds a supply line 108 that in turn, feeds paint booth supply lines 104 and 105. The paint booth supply line 104 feeds paint booth 102, and, the paint booth supply line 105 feeds paint booth 103. Paint flows through applicators such as those referenced as 102a and 103a in the paint booths 102, 103. The applicators release some of the paint from the paint flow as spray that is applied to an object (not shown) situated within the paint booths 102, 103. Paint is returned from the paint booths via paint booth return lines 106 and 107 via a return pipe 109 to the pumping station 101.

The embodiments described herein with respect to the drawings comprise pipes, however embodiments are not limited to the use of pipes as supply/return lines. For example, any conduit such as a hose, orifice, or channel that is cast or machined could be used in place of pipes. There may be a combination of different types of conduit within a paint circulation system of the invention.

Paint booth back pressure regulators (BPRs) 110 and 111 are remotely controllable and in series with the paint booth return lines 106 and 107 respectively. BPR flow measurement means 112 and 113 are each associated with one of the BPRs 110 and 111 respectively and are located upstream of each BPR 110, 111. The BPRs 110, 111 are configured to maintain a pressure of paint flowing through the corresponding paint booth.

In the embodiment of Figure 1, the BPR flow measurement means 112 and 113 are located downstream of the paint booths 102, 103. However, in other embodiments the BPR flow measurement means could be located at other positions, such as upstream of the paint booths.

There is also a system BPR 115 in series with the return line 109. System BPR 115 prevents fluid from continuing to flow out of return pipe 109 to pumping station 101 when pumping ceases.

It will be appreciated that a paint flow system according to the invention can include any number of paint booths having corresponding BPRs, and varying numbers of paint applicators within the paint booths without departing from the scope of the invention.

In use, paint flows around the system, as indicated by arrows 114, and is applied to objects via the paint applicators 102a and 103a. In the example shown, the paint booth BPRs 110 and 111 are set at a desired pressure of 6 bar for each booth. In the shown embodiment, the supply and return lines 108, 104, 106, 105, 107, and 109 are cylindrical and have mm diameters as indicated in Figure 1. In other embodiments, the supply and return lines may have diameters from 12 to 50 mm. The lines may comprise hoses, pipes, or other known means for transferring fluid at pressure. In embodiments, the diameter of the lines can vary from those indicated in Figure 1.

Due to BPR drift, or a change in the system configuration such as replacement of a hose, the paint flow between booths may become unbalanced. In other words, there can arise a variation of flow rate between the two booths 102 and 103. It will therefore be necessary to adjust the pressure setting of the BPR in order to ensure that a constant flow rate of paint is maintained through each booth. In particular, it may be desired for the flow rate through each booth to be balanced (i.e. the same).

Flow indication means 112 and 113 indicate the flow rate without obstructing the paint flow in a manner as will be detailed below. Flow indication means provide a flow rate signal to a controller (not shown). This value is used to adjust the BPRs 110 and 111 in order that the desired flow rate is maintained through the paint booths. The BPRs 110 and 111 may (but not necessarily) be pilot-operated BPRs as mentioned in the Summary section above. For example, the BPRs may be air-operated and remotely controllable by varying the pressure of a fluid that applies pressure to a movable surface within the BPR thereby adjusting the size of a variable restriction in the paint flow passage. Therefore, the BPRs are remotely controllable using signals provided by the controller (not shown). The BPRs are automatically controlled by the controller to maintain the desired flow rate. In embodiments, the flow rate through each paint booth can be reported to the relevant paint system controller and displayed to operators using a computer terminal (not shown). In the embodiment of Figure 1, the flow rate downstream of the paint booths 102 and 103 is indicated. However in other embodiments, the flow rate upstream of the paint booths may be indicated and used to provide the flow rate signal.

In some embodiments, the indication of flow rate is a pressure drop measurement. As will be discussed below, measurement of a pressure drop provides an indication of flow rate that can be used for comparing the flow rate between different booths. Therefore, a controller can be configured to ensure that flow rate through each booth 102, 103 is substantially the same by adjusting the BPRs 110, 111 so that the pressure drop measurement indicated by flow indication means is the same.

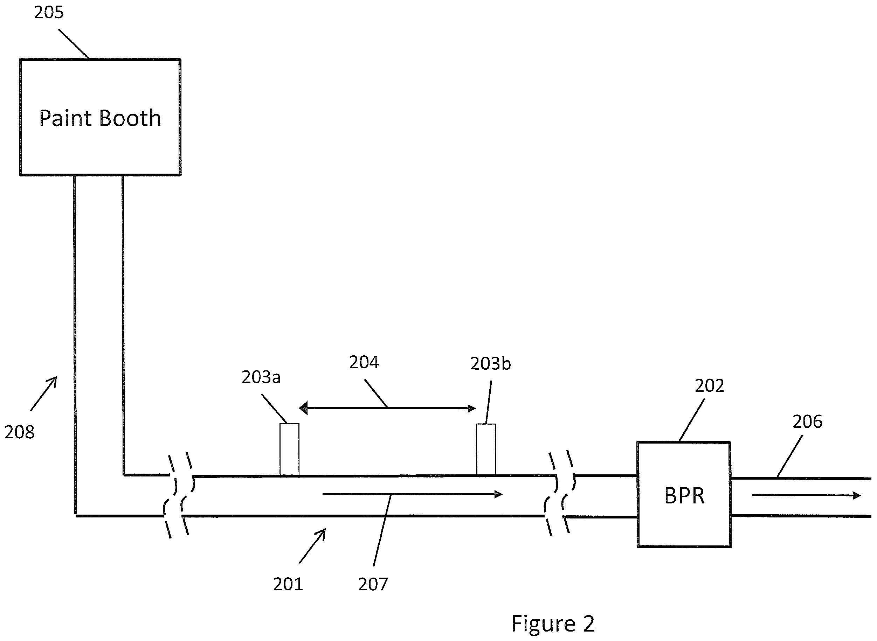

Figure 2 is a schematic representation of a flow measurement means according to the invention.

Pressure sensors 203a and 203b are positioned to measure the change in pressure of paint within the section of line 201 of the length indicated by arrow 204 that is between the pressure sensors. Pressure sensors 203a, 203b are static pressure sensors that are unobtrusive and do not restrict the paint flow. Paint flows in the direction as indicated by the arrow 207, and there will be a pressure drop from pressure sensor 203a to 203b. The pressure drop value is measured by sensors 203a and 203b that are positioned in the section of line 201 that is upstream of the BPR 202, and downstream of paint booth 205. The section of line 201 is shown as a cylindrical pipe having a known constant diameter, however this is not the case in all embodiments. The section of line 201 is shown as being straight, however in embodiments this section is not necessarily straight, for example the section may be curved. The pressure drop is indicative of the flow rate of paint within the line 201. This flow rate is indicative of the flow rate of paint through the paint booth 205.

Whilst the calculation of flow rate from the measured pressure drop discussed below is implemented in some embodiments, in other embodiments this explanations serves to provide an illustration of how the measured pressure drop value is indicative of the flow rate. In the latter embodiments, the flow rate is not calculated and merely the measured pressure drop is used by the controller. As long as the geometry of each section of line for the flow measurement means of each paint booth 201 are substantially equivalent, then the relative flow rate between each paint booth can be compared. The controller can be configured to adjust the BPR so that the flow rate through each paint booth is the same by ensuring that the measured pressure drop for each section of line 201 corresponding to each paint booth is the same.

In the embodiment shown, the flow rate from the pumping station 101 (of Figure 1) is known and an operator can configure the controller to provide a particular flow rate ratio expressed as a percentage to each booth. For example, 50%/50%.

The flow rate can be determined using the pressure drop formula:

$$P = \frac{679 \, QVL}{F}$$

Where:

P = Pressure Drop in bar (measured using pressure sensors 203a, 203b)
Q = Flow rate in Litres/min
L = Length of pipe in metres (as referenced as 204 in Figure 2)
V = Dynamic Viscosity of paint in poise (known depending on the paint used)
F = Pipe factor ($4^{th}$ power of line section diameter or hydraulic diameter in mm)
679 is a dimensionless flow constant based on the mass flow characteristics for a typical pipe/hose used in an exemplary paint circulating system. In particular, the flow constant is based on the frictional coefficient of a steel pipe within the limit of ensuring laminar flow. The flow constant provides for a simple calculation of the flow rate assuming a worst case scenario for the condition of the pipeline. It will be appreciated that where the line section 201 does not comprise a pipe of constant diameter, then the Length and Pipe factor are replaced by a single constant that depends on the geometry of the line section 201.

In some embodiments, where a non-tubular conduit is used instead of a pipe, the hydraulic diameter can be used to calculate the pipe factor, the hydraulic diameter is determined by the formula 4*(cross-sectional area of section)/perimeter of section.

In an exemplary embodiment, a controller (not shown) calculates the flow rate of paint based on the measured pressure drop using sensors 203a, 203b and the remaining known factors as per the pressure drop formula. As discussed above, the flow rate is used to adjust the setting of the BPR 202 to ensure that the desired flow rate is maintained.

Line 206 transfers the paint to downstream components of the paint circulating system such as a pump (not shown).

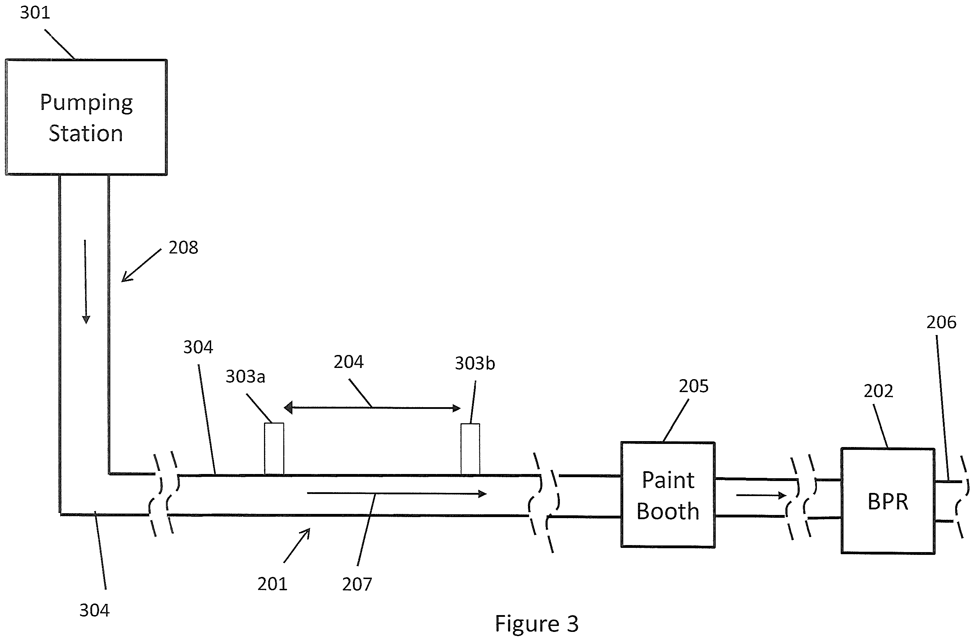

Figure 3 shows an alternative embodiment where sensors 303a, 303b are located upstream of the paint booth 205. Paint flows through supply line 304 from pumping station 301. The flow rate is indicated using the methods described above from pressure readings taken upstream of the paint booth 205. The remaining reference numerals of Figure 3 refer to features as discussed above with respect to Figure 2.

**Claims**

1. A paint circulating system suitable for providing paint to applicators in a product finishing facility, the system comprising:

    a pump (101) for pumping paint around the system;
    an automatically adjustable back-pressure regulator, BPR, (110, 111, 202) to reduce pressure fluctuations of paint upstream of the BPR (110, 111, 202);
    means for indicating a flow rate of paint through a conduit (201) upstream of the BPR (110, 111, 202) comprising means for measuring a pressure drop in the paint flow along a length of a section of the conduit (201) without restricting the paint flow, wherein the means for measuring a pressure drop in the paint comprises pressure sensors (203a, 203b) configured to measure a starting pressure of paint at the start of the section of the conduit (201), and an ending pressure of paint at the end of the section of the conduit (201);
    control means for adjusting a setting of the BPR (110, 111, 202) to maintain a desired flow rate based on the indicated flow rate.

2. A paint circulating system according to claim 1 wherein the pressure sensors comprise two pressure sensors (203a, 203b), one pressure sensor being located at each end of the section of conduit (201).

3. A paint circulating system according to any of claims 1 or 2 wherein the means for determining a flow rate of paint further comprises means for calculating the flow rate based on the measured pressure drop, the dynamic viscosity of the paint, the length of the section of the conduit (201), and a cross sectional parameter of the conduit (201).

4. A paint circulating system according to claim 3 wherein the section of the conduit (201) has a constant cross section, and the cross sectional parameter is a diameter or hydraulic diameter of the constant cross section, and optionally, wherein the means for calculating the flow rate is configured to be additionally based on a flow constant being 679.

5. A paint circulating system according to claim 3 wherein the section of the conduit (201) has a variable cross section that does not vary significantly enough to cause degradation of paint, and, the cross sectional parameter is derived from cross sectional dimensions of the section of the conduit (201), and optionally, wherein the means for calculating the flow rate is configured to be additionally based on a flow constant being 679.

6. A paint circulating system according to any preceding claim wherein the means for indicating a flow rate is arranged to provide a flow rate signal to a paint system controller, and optionally, wherein the control means is arranged to receive a control signal from the paint system controller based on the flow rate signal and accordingly control the BPR (110, 111, 202) for maintaining the desired flow rate.

7. A paint circulating system according to claim 6 wherein the paint system controller comprises means to display any of the flow rate or desired flow rate to an operator.

8. A paint circulating system according to any preceding claim comprising a plurality of paint flow paths wherein a BPR (110, 111, 202) is located in each flow path, and corresponding means are provided for indicating a corresponding flow rate through the corresponding paint flow path.

9. A paint circulating system according to claim 8 wherein the corresponding conduit section of the means for indicating flow rate of each flow path comprises an equivalent geometric form, and/or, wherein the paint system controller is operable to compare the flow rate corresponding to each paint flow path and automatically control the BPRs (110, 111, 202) to maintain the desired flow rate in each of the flow paths based on the flow rate comparison, and further optionally, wherein the paint system controller is operable to balance the flow rate through each paint flow path by controlling the BPRs (110, 111, 202) of each of the plurality of paint flow paths to each maintain an equal proportion of a master flow rate based on the flow rate comparison, wherein the master flow rate is provided by a pumping station configured to pump paint to the plurality of paint flow paths.

10. A paint circulation system according to any of claims 8 or 9 wherein each of the paint flow paths comprises a corresponding paint booth (205).

11. A method of operating a paint circulating system to provide paint to applicators in a product finishing facility comprising the steps of:

    pumping paint around the system;
    measuring, without restricting the paint flow and utilizing two or more pressure sensors (203a, 203b) configured to measure a starting pressure of paint at the start of the section of the conduit (201), and an ending pressure of paint at the end of the section of conduit (201), a pressure drop in the paint along a length of a section (201) of the conduit indicative of a flow rate of paint through a conduit upstream of a back-pressure regulator (BPR) (110, 111, 202); and
controlling the BPR (110, 111, 202) to maintain a desired flow rate based on the indicated flow rate.

12. A method of operating a paint circulation system according to claim 11 wherein the step of indicating a flow rate comprises calculating the flow rate based on the measured pressure drop, the dynamic viscosity of the paint, the length of the section of the conduit, and a hydraulic diameter of the conduit (201).

13. A method of operating a paint circulation system according to any of claims 11 to 12 comprising the step of comparing the flow rate of paint through each of a plurality paint flow paths each comprising one of a plurality of BPRs (110, 111, 202), and controlling each BPR (110, 111, 202) to maintain a desired flow rate to each of the plurality of paint flow paths, and optionally, wherein each of the paint flow paths comprises a corresponding paint booth (205).

## Patentansprüche

1. Farbkreislaufsystem, das zum Bereitstellen von Farbe an Applikatoren in einer Produktveredelungsanlage geeignet ist, wobei das System Folgendes umfasst:

eine Pumpe (101) zum Umherpumpen von Farbe in dem System;
einen automatisch einstellbaren Gegendruckregler, BPR, (110, 111, 202), um Druckschwankungen der Farbe stromaufwärts des BPR (110, 111, 202) zu verringern;
Mittel zum Anzeigen einer Flussrate von Farbe durch eine Leitung (201) stromaufwärts des BPR (110, 111, 202), umfassend Mittel zum Messen eines Druckabfalls im Farbfluss entlang einer Länge eines Abschnitts der Leitung (201), ohne den Farbfluss einzuschränken, wobei die Mittel zum Messen eines Druckabfalls in der Farbe Drucksensoren (203a, 203b) umfassen, die zum Messen eines Anfangsdrucks der Farbe am Anfang des Abschnitts der Leitung (201) und eines Enddrucks der Farbe am Ende des Abschnitts der Leitung (201) konfiguriert sind;
Steuermittel zum Anpassen einer Einstellung des BPR (110, 111, 202), um eine gewünschte Flussrate basierend auf der angezeigten Flussrate aufrechtzuerhalten.

2. Farbkreislaufsystem nach Anspruch 1, wobei die Drucksensoren zwei Drucksensoren (203a, 203b) umfassen, wobei sich an jedem Ende des Leitungsabschnitts (201) ein Drucksensor befindet.

3. Farbkreislaufsystem nach einem der Ansprüche 1 oder 2, wobei die Mittel zum Bestimmen einer Farbflussrate weiter Mittel zum Berechnen der Flussrate basierend auf dem gemessenen Druckabfall, der dynamischen Viskosität der Farbe, der Länge des Abschnitts der Leitung (201) und einem Querschnittsparameter der Leitung (201) umfassen.

4. Farbkreislaufsystem nach Anspruch 3, wobei der Abschnitt der Leitung (201) einen konstanten Querschnitt aufweist und der Querschnittsparameter ein Durchmesser oder hydraulischer Durchmesser des konstanten Querschnitts ist, und wobei optional die Mittel zum Berechnen der Flussrate so konfiguriert sind, dass sie zusätzlich auf einer Flusskonstante von 679 basieren.

5. Farbkreislaufsystem nach Anspruch 3, wobei der Abschnitt der Leitung (201) einen veränderlichen Querschnitt aufweist, der nicht erheblich genug schwankt, um eine Verschlechterung der Farbe zu verursachen, und wobei der Querschnittsparameter aus Querschnittsabmessungen des Abschnitts der Leitung (201) abgeleitet wird, und wobei optionale die Mittel zum Berechnen der Flussrate so konfiguriert sind, dass sie zusätzlich auf einer Flusskonstante von 679 basieren.

6. Farbkreislaufsystem nach einem vorstehenden Anspruch, wobei das Mittel zum Anzeigen einer Flussrate dazu angeordnet ist, ein Flussratensignal an eine Farbsystemsteuereinheit bereitzustellen, und wobei optional das Steuermittel dazu ausgelegt ist, basierend auf dem Flussratensignal ein Steuersignal von der Farbsystemsteuereinheit zu empfangen und dementsprechend den BPR (110, 111, 202) zu steuern, um die gewünschte Flussrate aufrechtzuerhalten.

7. Farbkreislaufsystem nach Anspruch 6, wobei die Farbsystemsteuereinheit Mittel zum Anzeigen einer beliebigen der Flussrate oder der gewünschten Flussrate für einen Bediener umfasst.

8. Farbkreislaufsystem nach einem vorstehenden Anspruch, das eine Vielzahl von Farbfließwegen umfasst, wobei sich in jedem Fließweg ein BPR (110, 111, 202) befindet und entsprechende Mittel zum Anzeigen einer entsprechenden Flussrate durch den entsprechenden Farbfließweg bereitgestellt sind.

9. Farbkreislaufsystem nach Anspruch 8, wobei der entsprechende Leitungsabschnitt der Mittel zum Anzeigen einer Flussrate jedes Fließwegs eine äquivalente geometrische Form aufweist, und/oder wobei die Farbsystemsteuereinheit betriebsfähig ist, die Flussrate entsprechend jedem Farbfließweg zu vergleichen und die BPRs (110, 111, 202) automatisch zu steuern, um die gewünschte Flussrate in jedem der Fließwege basierend auf dem Flussratenvergleich aufrechtzuerhalten, und wobei weiter optional die Farbsystemsteuereinheit betriebsfähig ist, die Flussrate durch jeden Farbfließweg auszugleichen, indem sie die BPRs (110, 111, 202) jedes der Vielzahl von Farbfließwegen steuert, jeweils einen gleichen Anteil einer Hauptflussrate basierend auf dem Flussratenvergleich aufrechtzuerhalten, wobei die Hauptflussrate durch eine Pumpstation bereitgestellt wird, die so konfiguriert ist, dass sie Farbe in die Vielzahl von Farbfließwegen pumpt.

10. Farbkreislaufsystem nach einem der Ansprüche 8 oder 9, wobei jeder der Farbfließwege eine entsprechende Farbkabine (205) umfasst.

11. Verfahren zum Betreiben eines Farbkreislaufsystems, um Farbe an Applikatoren in einer Produktveredelungsanlage bereitzustellen, das die folgenden Schritte umfasst:

Umherpumpen von Farbe in dem System; Messen eines Druckabfalls in der Farbe entlang einer Länge eines Abschnitts (201) der Leitung, der eine Flussrate der Farbe durch eine Leitung stromaufwärts eines Gegendruckreglers (BPR) (110, 111, 202) angibt, ohne den Farbfluss einzuschränken und unter Verwendung von zwei oder mehr Drucksensoren (203a, 203b), die zum Messen eines Anfangsdrucks der Farbe am Anfang des Abschnitts der Leitung (201) und eines Enddrucks der Farbe am Ende des Abschnitts der Leitung (201) konfiguriert sind; und Steuern des BPR (110, 111, 202), um eine gewünschte Flussrate basierend auf der angezeigten Flussrate aufrechtzuerhalten.

12. Verfahren zum Betreiben eines Farbkreislaufsystems nach Anspruch 11, wobei der Schritt zum Anzeigen einer Flussrate Berechnen der Flussrate basierend auf dem gemessenen Druckabfall, der dynamischen Viskosität der Farbe, der Länge des Leitungsabschnitts und einem hydraulischen Durchmesser der Leitung (201) umfasst.

13. Verfahren zum Betreiben eines Farbkreislaufsystems nach einem der Ansprüche 11 bis 12, umfassend den Schritt zum Vergleichen der Flussrate von Farbe durch jeden einer Vielzahl von Farbfließwegen, von denen jeder einen einer Vielzahl von BPRs (110, 111, 202) umfasst, und Steuern jedes BPR (110, 111, 202), um eine gewünschte Flussrate zu jedem der Vielzahl von Farbfließwegen aufrechtzuerhalten, und wobei optional jeder der Farbfließwege eine entsprechende Farbkabine (205) umfasst.

## Revendications

1. Système de circulation de peinture adapté pour fournir de la peinture à des applicateurs dans une installation de finition de produits, le système comprenant :

une pompe (101) pour pomper la peinture dans le système ; un régulateur de contre-pression, BPR, à réglage automatique (110, 111, 202) pour réduire les fluctuations de pression de la peinture en amont du BPR (110, 111, 202) ; des moyens d'indication d'un débit de peinture à travers un conduit (201) en amont du BPR (110, 111, 202) comprenant des moyens de mesure d'une chute de pression dans le débit de peinture le long d'une longueur d'une section du conduit (201) sans restreindre le débit de peinture, dans lequel les moyens de mesure d'une chute de pression dans la peinture comprennent des capteurs de pression (203a, 203b) configurés pour mesurer une pression de départ de peinture au début de la section du conduit (201), et une pression de fin de peinture à la fin de la section du conduit (201) ; des moyens de commande permettant de régler un réglage du BPR (110, 111, 202) pour maintenir un débit souhaité sur la base du débit indiqué.

2. Système de circulation de peinture selon la revendication 1, dans lequel les capteurs de pression comprennent deux capteurs de pression (203a, 203b), un capteur de pression étant situé à chaque extrémité de la section de conduit (201).

3. Système de circulation de peinture selon l'une quelconque des revendications 1 ou 2, dans lequel les moyens de détermination d'un débit de peinture comprennent en outre des moyens de calcul du débit sur la base de la chute de pression mesurée, de la viscosité dynamique de la peinture, de la longueur de la section du conduit (201) et d'un paramètre de section transversale du conduit (201).

4. Système de circulation de peinture selon la revendication 3, dans lequel la section du conduit (201) présente une section transversale constante, et le paramètre de section transversale est un diamètre ou un diamètre hydraulique de la section transversale constante, et facultativement, dans lequel les moyens de calcul du débit sont configurés pour être en outre basés sur une constante de débit égale à 679.

5. Système de circulation de peinture selon la revendication 3, dans lequel la section du conduit (201) présente une section transversale variable qui ne varie pas suffisamment de manière significative pour provoquer une dégradation de la peinture, et le paramètre de section transversale est dérivé des dimensions de section transversale de la section du conduit (201), et facultativement, dans lequel les moyens de calcul du débit sont configurés pour être en outre basés sur une constante de débit égale à 679.

6. Système de circulation de peinture selon une quelconque revendication précédente, dans lequel le moyen d'indication d'un débit est conçu pour fournir un signal de débit à un dispositif de commande de système de peinture et, facultativement, dans lequel les moyens de commande sont conçus pour recevoir un signal de commande du dispositif de commande de système de peinture sur la base du signal de débit et commander en conséquence le BPR (110, 111, 202) pour maintenir le débit souhaité.

7. Système de circulation de peinture selon la revendication 6, dans lequel le dispositif de commande de système de peinture comprend des moyens d'affichage de l'un quelconque parmi le débit ou le débit souhaité à un opérateur.

8. Système de circulation de peinture selon une quelconque revendication précédente, comprenant une pluralité de trajets d'écoulement de peinture dans lequel un BPR (110, 111, 202) est situé dans chaque trajet d'écoulement, et des moyens correspondants sont prévus pour indiquer un débit correspondant à travers le trajet d'écoulement de peinture correspondant.

9. Système de circulation de peinture selon la revendication 8, dans lequel la section de conduit correspondante des moyens d'indication du débit de chaque trajet d'écoulement comprend une forme géométrique équivalente, et/ou, dans lequel le dispositif de commande de système de peinture est apte à comparer le débit correspondant à chaque trajet d'écoulement de peinture et à commander automatiquement les BPR (110, 111, 202) pour maintenir le débit souhaité dans chacun des trajets d'écoulement sur la base de la comparaison de débit, et en outre facultativement, dans lequel le dispositif de commande de système de peinture est apte à équilibrer le débit à travers chaque trajet d'écoulement de peinture en commandant les BPR (110, 111, 202) de chacun de la pluralité de trajets d'écoulement de peinture pour maintenir chacun une proportion égale d'un débit maître sur la base de la comparaison de débit, dans lequel le débit maître est fourni par une station de pompage configurée pour pomper de la peinture vers la pluralité de trajets d'écoulement de peinture.

10. Système de circulation de peinture selon l'une quelconque des revendications 8 ou 9, dans lequel chacun des trajets d'écoulement de peinture comprend une cabine de peinture correspondante (205).

11. Procédé de fonctionnement d'un système de circulation de peinture pour fournir de la peinture à des applicateurs dans une installation de finition de produits comprenant les étapes consistant à :

pomper la peinture dans le système ;
mesurer, sans restreindre le débit de peinture et en utilisant deux capteurs de pression ou plus (203a, 203b) configurés pour mesurer une pression de départ de peinture au début de la section du conduit (201), et une pression de fin de peinture à la fin de la section de conduit (201), une chute de pression dans la peinture le long d'une longueur d'une section (201) du conduit indiquant un débit de peinture à travers un conduit en amont d'un régulateur de contre-pression (BPR) (110, 111, 202) ; et
commander le BPR (110, 111, 202) pour maintenir un débit souhaité sur la base du débit indiqué.

12. Procédé de fonctionnement d'un système de circulation de peinture selon la revendication 11, dans lequel l'étape d'indication d'un débit comprend le calcul du débit sur la base de la chute de pression mesurée, de la viscosité dynamique de la peinture, de la longueur de la section du conduit et d'un diamètre hydraulique du conduit (201).

13. Procédé de fonctionnement d'un système de circulation de peinture selon l'une quelconque des revendications 11 à 12, comprenant l'étape de comparaison du débit de peinture à travers chacun d'une pluralité de trajets d'écoulement de peinture comprenant chacun l'un d'une pluralité de BPR (110, 111, 202), et de commande de chaque BPR (110, 111, 202) pour maintenir un débit souhaité vers chacun de la pluralité de trajets d'écoulement de peinture, et facultativement, dans lequel chacun des trajets d'écoulement de peinture comprend une cabine de peinture correspondante (205).

Figure 1

Figure 2

Figure 3

EP 3 758 854 B1

**EP 3 758 854 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200701685 A1
- US 2006177565 A1

- EP 1830966 B1